# EUROPEAN PATENT APPLICATION

(11) **EP 2 339 858 A2**
(43) Date of publication of application: **29.06.2011**
(21) Application number: 10192808.3
(22) Date of filing: 26.11.2010
(51) Int. Cl.: H04N 13/00

(54) **3D Image Synchronization Apparatus and 3D Image Providing System**

(30) Priority: 22.12.2009 KR 20090129035; 08.03.2010 KR 20100020582
(71) Applicant: SAMSUNG ELECTRONICS CO., LTD., Suwon-si Gyeonggi-do 442-742 (KR)
(72) Inventor: Bai, Young-jai, Gyeonggi-do (KR); Choi, Young-hun, Gyeonggi-do (KR); Park, Young-woo, Gyeonggi-do (KR)
(74) Representative: Robinson, Ian Michael

(57) **Abstract**

A three dimensional (3D) image synchronization apparatus and a 3D image providing system are provided. The 3D image synchronization apparatus synchronizes at least one input 3D image using a single sync signal and outputs the synchronized 3D image. Accordingly, the plurality of display apparatus are synchronized with one another according to a single sync signal.

## Description

### CROSS-REFERENCE TO RELATED APPLICATION

This application claims priority from Korean Patent Application No. 10-2009-129035, filed on December 22, 2009, and No. 10-2010-20582, filed on March 8, 2010, in the Korean Intellectual Property Office, the disclosures of which are incorporated herein by reference in their entireties.

### BACKGROUND

**Field**

Apparatuses and methods consistent with the exemplary embodiments relate to a three-dimensional (3D) image synchronization apparatus and a 3D image providing system, and more particularly, to a 3D image synchronization apparatus and a 3D image providing system which display a 3D image using a plurality of display apparatuses.

**Description of the Related Art**

3D stereoscopy is applied to diverse fields such as information communication, broadcasting, medical service, education and training, military, games, animation, virtual reality, CAD, and industrial technologies, and is the core base technology of next generation 3D stereoscopic multimedia information communication, which is commonly utilized in the aforementioned diverse fields.

The stereoscopic sense that a person generally perceives is generated by the complex action of diverse factors, such as a degree of change in thickness of the lenses of the eyes according to the location of an object being observed, an angle difference between the eyes and the object, a difference in location and shape of the object as observed from the right and left eyes, a time difference due to a movement of the object, and other diverse psychological and memory effects.

Among these, binocular disparity, which appears due to the horizontal separation of about 6-7 cm between the two eyes of a person, is the most important factor in the perception of a stereoscopic image. That is, a person observes an object with an angle difference due to the binocular disparity and thus images entering the two eyes are different. If these two images are transmitted to the brain through the retinas, the brain accurately combines two pieces of information and thus the viewer perceives an 3D stereoscopic image.

3D image display apparatuses are divided into glasses types using special glasses and non-glasses types type which operate without using special glasses. A glasses type apparatus employs a color filter scheme which separates and selects an image using complementary color filters, a polarization filter scheme which separates a left-eye image and a right-eye image using a light shielding effect obtained by combination of orthogonal polarization elements, or a shutter glasses scheme which alternately shades the left-eye and the right-eye in response to a synchronization signal which projects a left-eye image signal and a right-eye image signal onto a screen, thereby allowing a viewer to perceive a stereoscopic image.

The 3D image consists of a left-eye image which is perceived by the left-eye and a right eye image which is perceived by the right-eye. The 3D image display apparatus provides a stereoscopic image using the time difference between the left-eye image and the right-eye image.

In a situation where several 3D display apparatuses, each using the shutter glasses scheme display 3D images simultaneously, if a user watches the several 3D display apparatus with a single pair of glasses, synchronization signals may be output from the respective 3D display apparatuses without being synchronized with each other. Accordingly, since the timing of alternating the left-eye image and the right-eye image on the 3D display apparatuses becomes different, it is difficult to watch the 3D image normally with a single pair of 3D glasses.

Therefore, there is a demand for a method and apparatus to enable watching a plurality of 3D display apparatuses in which synchronization signals are not synchronized using a single pair of glasses.

### SUMMARY

Exemplary embodiments overcome the above disadvantages and other disadvantages not described above. However, it is understood that an exemplary embodiment is not required to overcome the disadvantages described above, and an exemplary embodiment may not overcome any of the problems described above.

Exemplary embodiments provide a 3D image synchronization apparatus and a 3D image providing system, which synchronize at least one input 3D image according to a single sync signal and display the synchronized 3D image.

According to the present invention there is provided an apparatus and a system as set forth in the appended claims. Other features of the invention will be apparent from the dependent claims, and the description which follows.

According to an aspect of an exemplary embodiment, there is provided a three dimensional (3D) image synchronization apparatus, including a plurality of synchronization units which synchronize input 3D images using a sync signal and output the synchronized 3D images, wherein the plurality of synchronization units synchronize at least one input 3D image using a single sync signal and output the synchronized 3D image.

A specific one of the plurality of synchronization units may output a sync signal, and the other synchronization units may receive the sync signal and output the 3D image according to the received sync signal.

The specific synchronization unit may include: a first image input unit through which a 3D image signal is input, a first buffer which buffers the input 3D image signal on a frame basis, a first image output unit which outputs the buffered 3D image signal, a first controller which controls the buffer to output the buffered 3D image signal to the first image output unit according to a sync signal included in the 3D image signal, and a sync signal output unit which outputs the sync signal.

The specific synchronization unit may include: a first input unit through which a 3D image signal is input, a sync signal generator which generates a sync signal, a first buffer which buffers the input 3D image signal on a frame basis, a first image output unit which outputs the buffered 3D image signal, a first controller which controls the buffer to output the buffered 3D image signal to the first image output unit according to the generated sync signal, and a sync signal output unit which outputs the sync signal.

Each of the other synchronization units may include: a second image input unit through which a 3D image signal is input, a sync signal input unit which receives the sync signal from the specific synchronization unit, a second buffer which buffers the input 3D image signal on a frame basis, a second image output unit which outputs the buffered 3D image signal, and a controller which controls the buffer to output the buffered 3D image signal to the second image output unit according to the sync signal.

The plurality of synchronization units may receive 3D images from a single external apparatus.

The plurality of synchronization units may receive different 3D images from the single external apparatus.

The plurality of synchronization units may receive the same 3D image from the single external apparatus.

The plurality of synchronization units may receive 3D images from at least two external apparatuses.

According to an aspect of another exemplary embodiment, there is provided a 3D image providing system, including a 3D image synchronization apparatus which synchronizes at least one input 3D image using a single sync signal, and outputs the at least one synchronized 3D image through a plurality of output units, and a plurality of display apparatuses which receive a plurality of 3D images from the 3D image synchronization apparatus, and display the plurality of 3D images.

Each of the plurality of display apparatuses may include a glasses-signal transmitter which generates a glasses-control signal for synchronizing timing of opening and closing a left-eye glass and a right-eye glass of 3D glasses using the sync signal, and transmits the generated glasses-control signal.

The 3D image providing system may further include 3D glasses which receive a glasses-control signal from at least one of the plurality of display apparatuses, and synchronize timing of opening and closing the left-eye glass and the right-eye glass according to the received glasses-control signal.

The plurality of display apparatuses may synchronize timing of displaying a left-eye image and a right-eye image according the sync signal, and the 3D glasses may synchronize the timing of displaying the left-eye image and the right-eye image of the 3D image on the plurality of display apparatuses with the timing of opening and closing the left-eye glass and the right-eye glass of the 3D glasses according to the glasses-control signal.

The sync signal may have a pattern in which a first period and a second period are alternated, and the glasses-control signal may have a pattern in which the first period and the second period are synchronized with the sync signal so that the first period and the second period are alternated, and the plurality of display apparatuses display the left-eye image during the first period of the sync signal and the right-eye image during the second period of the sync signal. The 3D glasses are driven in a manner that the left-eye glass is opened and the right-eye glass is closed during the first period and the left-eye glass is closed and the right-eye glass is opened during the second period.

The 3D image synchronization apparatus may include a plurality of synchronization units which synchronize at least one input 3D image using a sync signal and outputs the synchronized 3D image, and a specific one of the plurality of synchronization units may output a sync signal and the other synchronization units may receive the sync signal and output the 3D image according to the received sync signal.

The specific synchronization unit may include: a first image input unit through which a 3D image signal is input, a first buffer which buffers the input 3D image signal on a frame basis, a first image output unit which outputs the buffered 3D image signal, a first controller which controls the buffer to output the buffered 3D image signal to the first image output unit according to a sync signal included in the 3D image signal, and a sync signal output unit which outputs the sync signal.

The specific synchronization unit may include a first image input unit through which a 3D image signal is input, a sync signal generator which generates a sync signal, a first buffer which buffers the input 3D image signal on a frame basis, a first image output unit which outputs the buffered 3D image signal, a first controller which controls the buffer to output the buffered 3D image signal to the first image output unit according to the generated sync signal, and a sync signal output unit which outputs the sync signal.

Each of the other synchronization units may include: a second image input unit through which a 3D image signal is input, a sync signal input unit which receives the sync signal from the specific synchronization unit, a second buffer which buffers the input 3D image signal on a frame basis, a second image output unit which outputs the buffered 3D image signal, and a controller which controls the buffer to output the buffered 3D image signal to the second image output unit according to the sync signal.

Additional aspects and advantages of the present inventive concept will be set forth in the detailed description, will be obvious from the detailed description, or may be learned by practicing the invention.

### BRIEF DESCRIPTION OF THE DRAWINGS

The above and/or other exemplary aspects will be more apparent by describing in detail exemplary embodiments, with reference to the accompanying drawings in which:

FIG. 1 is a view illustrating a 3D image providing system for watching a plurality of 3D TVs using a single pair of glasses according to an exemplary embodiment;

FIG. 2 is a block diagram illustrating a 3D image synchronization apparatus according to an exemplary embodiment;

FIG. 3 is a view illustrating a 3D image providing system including three or more video apparatuses and three or more 3D TVs according to another exemplary embodiment;

FIG. 4 is a flowchart illustrating a method for synchronizing a 3D image according to an exemplary embodiment;

FIG. 5 is a block diagram illustrating a display apparatus including a synchronization unit according to an exemplary embodiment;

FIG. 6 is a block diagram illustrating a sync signal controller of the display apparatus in detail according to an exemplary embodiment;

FIG. 7 is a view illustrating operation of a plurality of display apparatuses being synchronized by respective synchronization units included in the display apparatus according to an exemplary embodiment;

FIG. 8 is a block diagram illustrating the synchronization unit according to an exemplary embodiment;

FIG. 9 is a block diagram illustrating the sync signal controller of the synchronization unit in detail according to an exemplary embodiment;

FIG. 10 is a 3D image providing system in which a plurality of display apparatuses are synchronized using a separate 3D image synchronization apparatus according to an exemplary embodiment; and

FIG. 11 is a block diagram illustrating 3D glasses according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the invention with unnecessary detail.

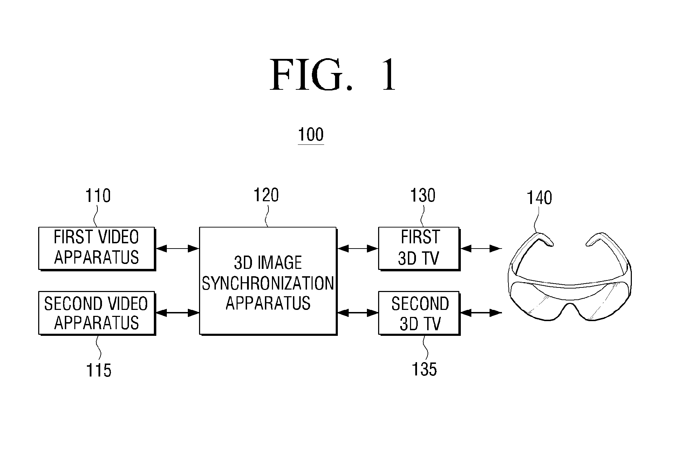

FIG. 1 is a block diagram illustrating a 3D image providing system 100 for a user to watch a plurality of 3D TVs 130, 135 using a single pair of 3D glasses 140 according to an exemplary embodiment.

As shown in FIG. 1, the 3D image providing system 100 includes a first video apparatus 110, a second video apparatus 115, a 3D image synchronization apparatus 120, a first 3D TV 130, a second 3D TV 135, and a pair of 3D glasses 140.

The video apparatus 110, 120 refers to a video playing apparatus and may include one or more of a digital video disk (DVD) player, a blue-ray display player (BD) player, and a camcorder.

The first video apparatus 110 transmits first 3D image data and a sync signal to the 3D image synchronization apparatus 120. The second video apparatus 115 transmits second 3D image data to the 3D image synchronization apparatus 120.

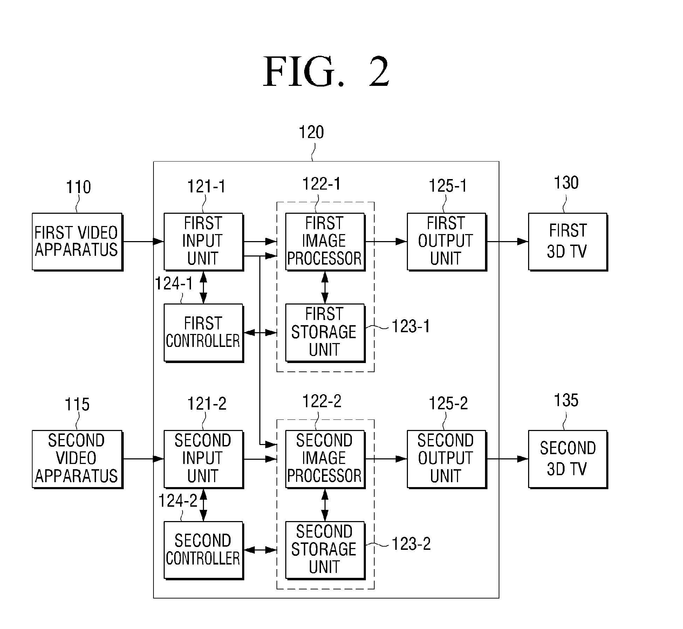

The 3D image synchronization apparatus 120 synchronizes the received first 3D image data and the received second 3D image data according to the sync signal received from the first video apparatus 110 and outputs them to the first 3D TV 130 and the second 3D TV 135. The synchronizing process on the 3D image will be explained below with reference to FIG. 2. The first 3D TV 130 and the second 3D TV 135 transmit the same sync signal to the pair of 3D glasses 140.

Accordingly, a user is able to watch the plurality of 3D TVs 130, 135 using the single pair of 3D glasses 140.

The synchronizing process will now be described with reference to FIG. 2. FIG. 2 is a block diagram illustrating the 3D image synchronization apparatus 120 in detail. As shown in FIG. 2, the 3D image synchronization apparatus 120 includes a first input unit 121-1, a first image processor 122-1, a first storage unit 123-1, a first controller 124-1, and a first output unit 125-1 to output the first 3D image data to the first 3D TV 130, and a second input unit 121-2, a second image processor 122-2, a second storage unit 123-2, a second controller 124-2, and a second output unit 125-2 to output the second 3D image data to the second 3D TV 135. The first image processor 122-1 and the second image processor 122-2 may be implemented as field programmable gate arrays (FPGAs).

The first input unit 121-1 receives the first 3D image data and the sync signal from the first video apparatus 110. The first controller 124-1 controls the first 3D image data, which is received from the first input unit 121-1, to be transmitted to the first image processor 122-1 and the sync signal to be transmitted to the first image processor 122-1 and the second image processor 122-2.

The first image processor 122-1 outputs the first 3D image data and the sync signal received from the first input unit 121-1 to the first output unit 125-1.

The first output unit 125-1 outputs the first 3D image data and the sync signal to the first 3D TV 130.

The first controller 124-1 controls the first input unit 121-1 to transmit the sync signal received from the first video apparatus 110 to the second image processor 122-2.

In the case that the sync signal is received from the first video apparatus 110, the 3D image synchronization apparatus 120 may omit the first storage unit 123-1.

The second input unit 121-2 receives the second 3D image data from the second video apparatus 115.

The second controller 124-2 controls the second input unit 121-2 to transmit the second 3D image data to the second image processor 122-2.

The second controller 124-2 controls the second storage unit 123-2 to temporarily store the second 3D image data received by the second image processor 122-2.

The second controller 124-2 controls the second storage unit 123-2 to store the second 3D image data until the second image processor 122-2 receives the sync signal from the first input unit 121-1.

If the second image processor 122-2 receives the sync signal from the first input unit 121-1, the second controller 124-2 transmits the second 3D image data stored in the second storage unit 123-2 to the second image processor 122-2 again.

The second image processor 122-2 transmits the sync signal received from the first input unit 121-1 and the second 3D image data received from the second storage unit 123-2 to the second output unit 125-2.

The second output unit 125-2 outputs the received second 3D image and the received sync signal to the second 3D TV 135.

Although the first controller 124-1 and the second controller 124-2 are separately provided in this embodiment, the first controller 124-1 and the second controller 124-2 may be incorporated into a single element.

In this embodiment, the 3D image synchronization apparatus 120 receives the sync signal from the first video apparatus 110, and transmits the first 3D image data and the sync signal to the first 3D TV 130 and transmits the second 3D image data and the sync signal to the second 3D TV 135. However, this is merely an example. For example, the 3D image synchronization apparatus 120 may receive a different sync signal from the second video apparatus 115, and may transmit the first 3D image data and the sync signal received from the second video apparatus 115 to the first 3D TV 130 and transmit the second 3D image data and the sync signal received from the second video apparatus 115 to the second 3D TV 135. In other words, there may be a single sync signal received from either the first video apparatus or from the second video apparatus.

As described above, since the 3D image synchronization apparatus 120 synchronizes the first 3D image data received from the first video apparatus 110 and the second 3D image data received from the second video apparatus 115 according to one sync signal, the user is able to watch the plurality of TVs 130, 135 using one pair of 3D glasses 140.

Although the two video apparatuses 110, 115 and the two 3D TVs 130, 135 are provided in FIGS. 1 and 2, this is merely an example for convenience of explanation. At least one video apparatus and at least one 3D TV may be provided. Also, the number of video apparatuses may be different from the number of 3D TVs. In other words, the 3D image synchronization apparatus 120 may have different numbers of input units and output units. For example, the 3D image synchronization apparatus 120 may receive an image through a single input unit, synchronize the input image, and output the synchronized image through three output units. Alternately, the 3D image synchronization apparatus 120 may receive images through three input units, synchronize the input images, and output the synchronized images through three output units.

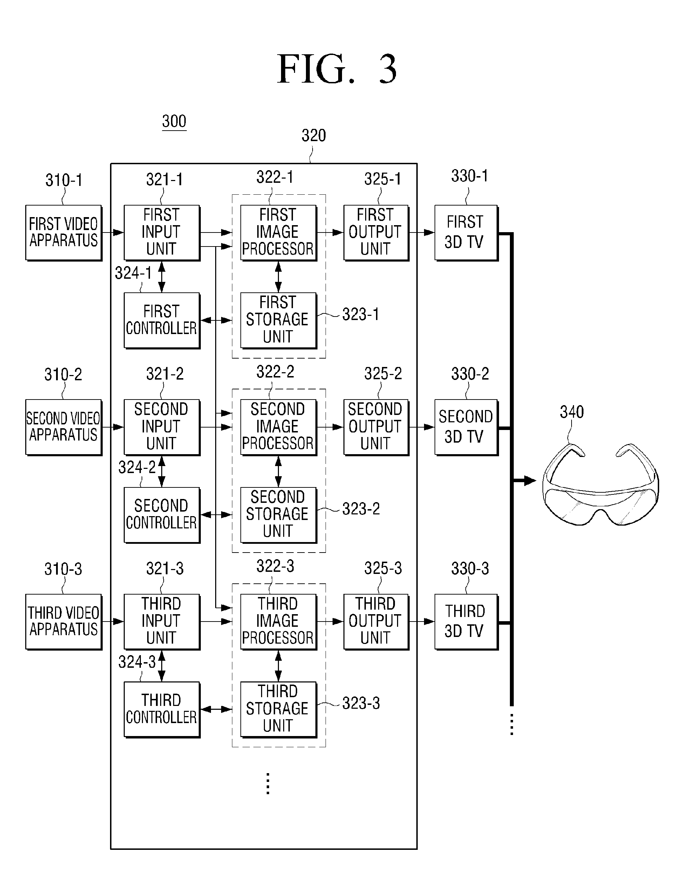

Hereinafter, a 3D image synchronizing process in the case that three video apparatuses and three 3D TVs are provided will be explained with reference to FIG. 3. FIG. 3 is a block diagram illustrating a 3D image providing system 300 which includes three or more video apparatuses 310-1, 310-2, 310-3,... and three or more 3D TVs 330-1, 330-2, 330-3,... according to another exemplary embodiment.

As shown in FIG. 3, the 3D image providing system 300 includes three or more video apparatuses 310-1, 310-2, 310-3,..., a 3D image synchronization apparatuses 320, three or more 3D TVs 330-1, 330-2, 330-3,..., and a pair of 3D glasses 340.

The 3D image synchronization apparatus 320 includes three or more input units 321-1, 321-2, 321-3,..., three or more image processors 322-1, 322-2, 322-3,..., three or more storage units 323-1, 323-2, 323-3,...), three or more controllers 324-1, 324-2, 324-3,..., and three or more output units 325-1, 325-2, 325-3,...).

The first input unit 321-1 receives first 3D image data and a sync signal from the first video apparatus 310-1. The first controller 324-1 controls the first 3D image data input through the first input unit 321-1 to be transmitted to the first image processor 322-1 and controls the sync signal to be transmitted to the plurality of image processors 322-1, 322-2, 322-3,....

The first image processor 322-1 outputs the first 3D image data and the sync signal received from the first input unit 321-1 to the first output unit 325-1.

The first output unit 325-1 outputs the first 3D image data and the sync signal received to the first 3D TV 330-1.

In the case that the sync signal is received from the first video apparatus 310-1, the 3D image synchronization apparatus 320 may omit the first storage unit 323-1.

The second input unit 321-2 receives second 3D image data from the second video apparatus 310-2.

The second controller 324-2 controls the second input unit 321-2 to transmits the second 3D image data to the second image processor 322-2.

The second controller 324-2 controls the second storage unit 323-2 to temporarily store the second 3D image data received by the second image processor 322-2.

The second controller 324-2 controls the second storage unit 323-2 to store the second 3D image data until the second image processor 322-2 receives the sync signal from the first input unit 321-1.

If the second image processor 322-2 receives the sync signal from the first input unit 321-1, the second controller 324-2 transmits the second 3D image data stored in the second storage unit 323-2 to the second image processor 322-2 again.

The second image processor 322-2 transmits the sync signal received from the first input unit 321-1 and the second 3D image data received from the second storage unit 323-2 to the second output unit 325-2.

The second output unit 325-2 outputs the second 3D image data and the sync signal to the second 3D TV 330-2.

The third input unit 321-3 receives third 3D image data from the third video apparatus 310-3.

The third controller 324-3 controls the third input unit 321-3 to transmit the third 3D image data to the third image processor 322-3.

The third controller 322-3 controls the third storage unit 323-3 to temporarily store the third 3D image data received by the third image processor 322-3.

The third controller 324-3 controls the third storage unit 323-3 to store the third 3D image data until the third image processor 322-3 receives the sync signal from the first input unit 321-1.

If the third image processor 322-3 receives the sync signal from the first input unit 321-1, the third controller 324-3 transmits the third 3D image data stored in the third storage unit 323-3 to the third image processor 322-3 again.

The third image processor 322-3 transmits the sync signal received from the first input unit 321-1 and the third 3D image data received from the third storage unit 323-3 to the third output unit 325-3.

The third output unit 325-3 outputs the third 3D image data and the sync signal to the third 3D TV 330-3.

That is, the input units 321-2, 321-3,... except for the first input unit 321-1, the image processors 322-2, 322-3,... except for the first image processor 322-1, the storage units 323-2, 323-3,... except for the first storage unit 323-1, and the controllers 324-2, 324-3,... except for the first controller 324-1 are the same in their respective functions.

Although the three or more controllers 324-1, 324-2, 324-3,...are separately provided in this exemplary embodiment, the three or more controllers 324-1, 324-2, 324-3,... may be incorporated into a single controller.

The sync signal is received from the first video apparatus 310-1 in this embodiment, but this is merely an example. For example, a different sync signal may be received from one of the plurality of video apparatuses 310-2, 310-3,... other than the first video apparatus 310-1.

As described above, since three or more 3D image data received from the three or more video apparatuses 310-1, 310-2, 310-3,... are synchronized according to one sync signal, it is possible for the user to watch the three or more 3D TVs 330-1, 330-2, 330-3,... using one pair of 3D glasses 340.

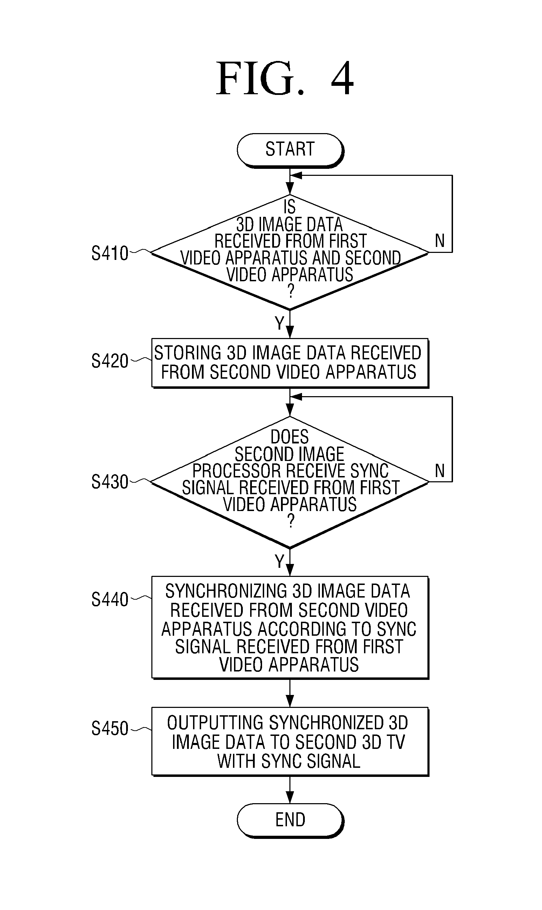

A process of synchronizing a plurality of 3D image data will be explained with reference to FIG. 4. FIG. 4 is a flowchart illustrating a method for synchronizing a 3D image according to an exemplary embodiment. In FIG. 4, it is assumed that two video apparatuses and two 3D TVs are provided as in the case of FIG. 1. In the case that three or more video apparatuses and three or more 3D TVs are provided, their synchronizing operation can be inferred from FIG. 4 and thus a description thereof is omitted.

If the 3D image synchronization apparatus 120 receives 3D image data from each of the first video apparatus 110 and the second video apparatus 114 (S410-Y), the 3D image synchronization apparatus 120 stores the 3D image data received from the second video apparatus 115 (S420).

Next, the 3D image synchronization apparatus 120 determines whether the sync signal received from the first video apparatus 110 has been transmitted to the second image processor 122-2 or not (S430). If the sync signal received from the first video apparatus 110 has been transmitted to the second image processor 122-2 (S430-Y), the 3D image synchronization apparatus 120 synchronizes the 3D image data received from the second video apparatus 115 according to the sync signal received from the first video apparatus 110 (S440).

More specifically, if it is determined that the sync signal is received from the first video apparatus 110, the 3D image data received from the second video apparatus 115 and temporarily stored in the second storage unit 123-2 is transmitted to the second image processor 122-2, and the 3D image data transmitted to the second image processor 122-2 is transmitted to the second output unit 125-2 along with the sync signal.

Then, the 3D image synchronization apparatus 120 outputs the 3D image data and the sync signal transmitted to the second output unit 125-2 to the second 3D TV 135 (S450).

Accordingly, it is possible for the user watch the plurality of 3D TVs 130, 135 using one pair of 3D glasses 140.

So far, using the 3D image synchronization apparatus 120 to synchronize the plurality of 3D TVs 130, 135 has been explained.

However, it is possible to implement the 3D image synchronization apparatus 120 as embedded within a display apparatus rather than provided as a separate apparatus. Hereinafter, a display apparatus 500 having a synchronization unit 330 embedded therein, which corresponds to the 3D image synchronization apparatus 120, will be explained.

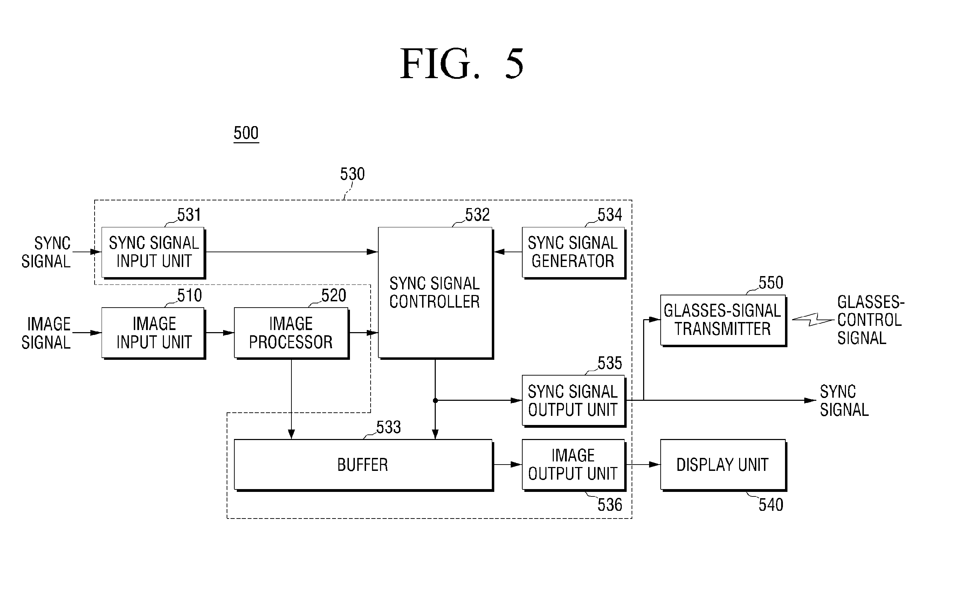

FIG. 5 is a block diagram illustrating a display apparatus 500 including a synchronization unit 330 according to an exemplary embodiment. As shown in FIG. 5, the display apparatus 500 includes an image input unit 510, an image processor 520, the synchronization unit 530, a display unit 540, and a glasses-signal transmitter 550.

The image input unit 510 receives an image signal from an external apparatus. For example, the image input unit 510 may receive an image signal from a DVD player or a BD player. Also, the image input unit 510 may receive an image signal through a broadcast using a broadcast receiving antenna and a tuner employed therein. Also, the image input unit 510 may be diverse types of interfaces. For example, the image input unit 510 may be a digital video/visual interactive (DVI) or a high-definition multimedia interface (HDMI). The image signal may be a 3D image signal including a left-eye image and a right-eye image.

The image processor 520 performs signal-processing such as video decoding, format analysis, and video scaling, and adding of a graphical user interface with respect to an input image.

Also, if the input image is a 3D image, the image processor 520 generates a left-eye image and a right-eye image which correspond to a size (for example, 1920*1080) of one screen using the format of the 3D image. If the 3D image format is a format according to a top-bottom scheme, a side by side scheme, a horizontal interleave scheme, a vertical interleave scheme, or a checker board scheme, the image processor 220 extracts a left-eye part and a right-eye part from each image frame, and up-scales or interpolates the extracted left-eye part and the extracted right-eye part, thereby generating a left-eye image and a right-eye image for the user.

The synchronization unit 530 receives a sync signal from the external apparatus and outputs the image signal according to the sync signal. More specifically, the synchronization unit 530 includes a sync signal input unit 531, a sync signal controller 532, a buffer 533, a sync signal generator 534, a sync signal output unit 535, and an image output unit 536.

The sync signal input unit 531 receives the sync signal from the external apparatus. The sync signal, used herein, is to control the timing of outputting the input image on a frame-by-frame basis. For example, the period of a sync signal may correspond to a period during which one frame of the image is output. Also, if the input image is a 3D image, the period of a sync signal may indicate a period of time during which the left-eye image and the right-eye image are each output one time. Also, the sync signal may be used to control the opening and closing timing of the 3D glasses for watching the 3D image.

The sync signal controller 532 controls the buffer 533 to output the image signal, which is buffered in the buffer 533, to the image output unit 536 according to the sync signal input through the sync signal input unit 531. That is, if the sync signal is input to the sync signal input unit 531, the sync signal controller 532 controls the image signal to be displayed according to the input sync signal.

Also, if the sync signal is not input to the sync signal input unit 531, the sync signal controller 532 controls the buffer 533 to output the buffered image signal to the image output unit 536 according to a sync signal included in the image signal. That is, if the sync signal is not input through the sync signal input unit 531, the sync signal controller 532 controls the image signal to be displayed according to the sync signal included in the image signal.

If the sync signal is not input to the sync signal input unit 531 and the image signal is not input to the image input unit 510 either, the sync signal controller 532 outputs a sync signal which is generated by the sync signal generator 334. In this case, since no image signal is input, the display apparatus 500 only performs generating and outputting a sync signal.

The buffer 533 buffers the image signal output from the image processor 520 on the frame-by-frame basis. Also, the buffer 533 outputs the image signal according to the sync signal under the control of the sync signal controller 532. For example, the buffer 533 may output the image signal corresponding to one frame every one period of the sync signal.

The sync signal generator 534 generates a separate sync signal, and outputs the generated sync signal to the sync signal controller 532.

The sync signal output unit 535 outputs the sync signal received from the sync signal controller 534 to the external apparatus. For example, the sync signal output unit 535 may be connected to a display apparatus such as a TV to output the sync signal to the display apparatus.

The image output unit 536 outputs the image signal received from the buffer 533 to the external apparatus connected thereto. For example, the image output unit 536 may be connected to a display apparatus such as a TV to output the image signal to the display apparatus. At this time, the image output unit 536 outputs the image signal which has been synchronized according to the sync signal.

The display unit 540 displays the image signal output from the synchronization unit 530. Accordingly, the display unit 540 displays the image signal according to the sync signal of the synchronization unit 530.

The glasses-signal transmitter 550 transmits a glasses-sync signal which corresponds to the sync signal output from the synchronization signal output unit 535 to the 3D glasses. The glasses-sync signal is a sync signal to control the timing of opening and closing the 3D glasses. The glasses-signal transmitter 550 may transmit the glasses-sync signal in various communication schemes, for example, in an infrared ray communication scheme.

The display apparatus 500 including the synchronization unit 530 described above may be a reference display apparatus for the sync signal. Also, the display apparatus 500 including the synchronization unit 530 may receive a sync signal from a reference display apparatus, be synchronized with the reference display apparatus, and display an image. Accordingly, if a plurality of display apparatuses display a 3D image, the plurality of display apparatus can synchronize the timing of displaying the left-eye image and the right-eye image. Therefore, the user can watch the 3D image displayed on the plurality of display apparatuses using one pair of glasses.

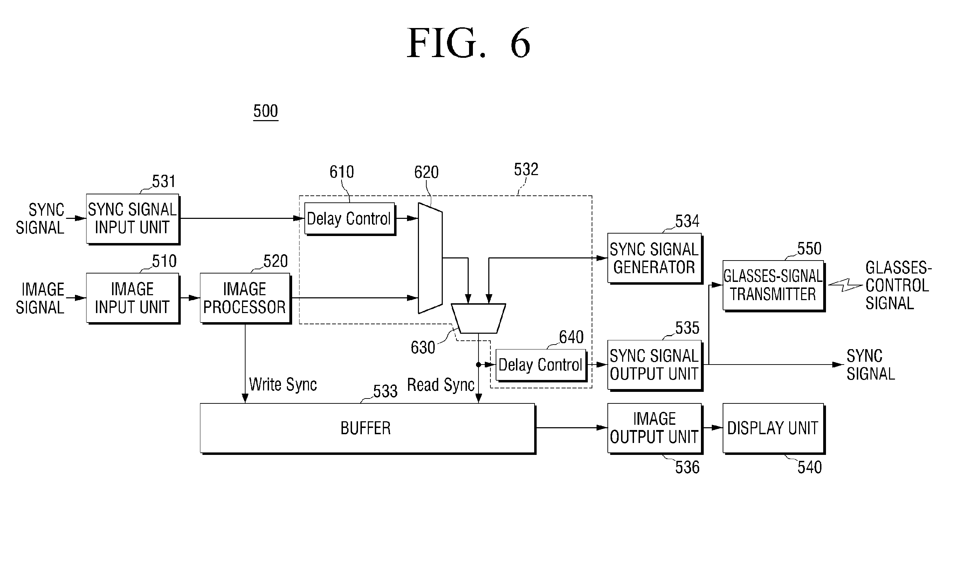

Hereinafter, the sync signal controller 532 will be explained in detail with reference to FIG. 6. FIG. 6 is a block diagram illustrating the sync signal controller 532 of the display apparatus 500 in detail according to an exemplary embodiment.

As shown in FIG. 6, the sync signal controller 532 includes a delay control 610, a first multiplexer 620, a second multiplexer 630, and another delay control 640.

The delay control 610 controls the delay of the sync signal input through the sync signal input unit 531.

The first multiplexer 620 selects one of the sync signal input from the sync signal input unit 531 and the sync signal input from the image processor 530 (that is, a frame lock signal), and outputs the selected sync signal. More specifically, if the sync signal of the sync signal input unit 531 and the sync signal of the image processor 530 are both input, the first multiplexer 620 selects the sync signal input from the sync signal input unit 531 and outputs it. If only one of the sync signal of the sync signal input unit 531 and the sync signal of the image processor 530 is received by the first multiplexer 620, the first multiplexer 620 outputs the one sync signal that is received.

The second multiplexer 630 controls which sync signal, of the sync signal output from the first multiplexer 620 and the sync signal output from the sync signal generator 534, is to be output. More specifically, if the sync signal output from the first multiplexer 620 and the sync signal output from the sync signal generator 534 are both received by the second multiplexer 630, the second multiplexer 630 selects the sync signal output from the first multiplexer 620 and outputs it. Also, if only one of the sync signal output from the first multiplexer 620 and the sync signal output from the sync signal generator 534 is received, the second multiplexer 630 selects and outputs the received sync signal.

The another delay control 640 controls the delay of the sync signal finally output from the second multiplexer 630 and outputs the sync signal to the sync signal output unit 535.

The buffer 533 writes the image signal when receiving a write sync signal from the image processor 520. The buffer 533 outputs the written image signal to the image output unit 536 when receiving a read sync signal from the sync signal controller 532. At this time, the sync signal controller 532 outputs the read sync signal according to the sync signal such that the buffer 533 outputs the image signal according to the sync signal.

Through the above-described configuration, if a sync signal is received from the sync signal input unit 531, the sync signal controller 532 synchronizes the image according to the sync signal received through the sync signal input unit 531. Otherwise, the sync signal controller 532 synchronizes the image according to the sync signal included in the image signal. Also, the sync signal controller 532 outputs the sync signal generated by the sync signal generator 534 if no sync signal is received from the sync signal input unit 531 or from the image processor.

The display apparatus 500 having the above-described configuration synchronizes the input image according to the sync signal input from the external apparatus. Also, the display apparatus 500 may output a sync signal to an external apparatus. Also, the plurality of 3D display apparatuses can be synchronized using the display apparatus 500.

Hereinafter, a method for synchronizing a plurality of display apparatuses will be explained.

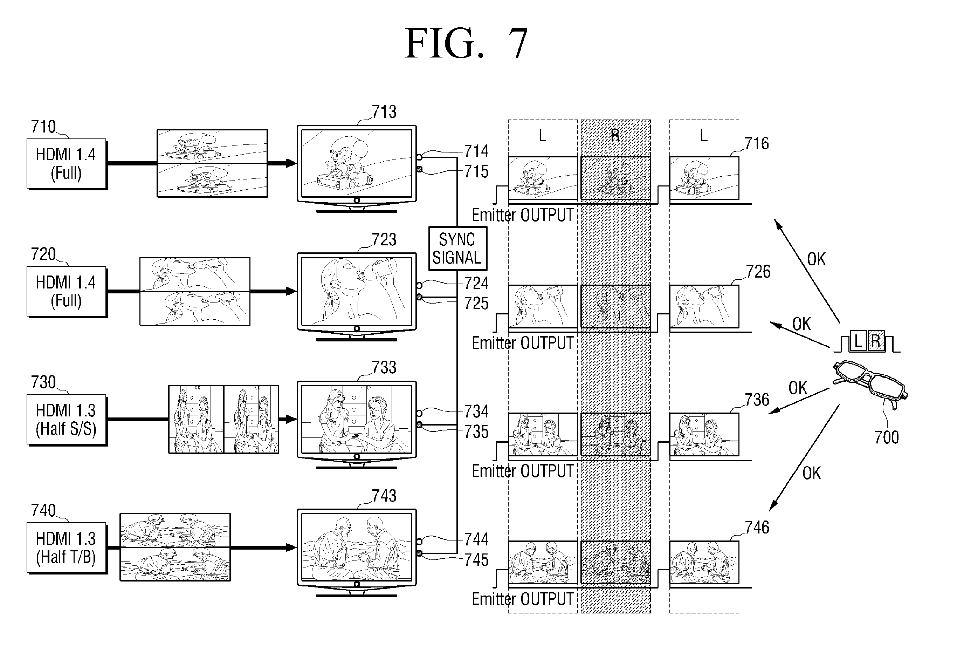

FIG. 7 is a view illustrating operation of a plurality of display apparatuses being synchronized by respective synchronization units included the display apparatuses according to an exemplary embodiment.

As shown in FIG. 7, four display apparatuses 713, 723, 733, 743 receive 3D images through four image input units 710, 720, 730, 740. Frames of the 3D images are input from the four image input units 710, 720, 730, 740 at different timings.

All of the four display apparatuses 713, 723, 733, 743 shown in FIG. 7 include synchronization units 530 as in the display apparatus 500 of FIG. 5. Accordingly, all of the four display apparatuses 713, 723, 733, 743 include sync signal output units 714, 724, 734, 744 and sync signal input units 715, 725, 735, 745.

In FIG. 7, the first sync signal output unit 714 of the first display apparatus 713 is connected to the second sync signal input unit 725 of the second display apparatus 723, the third sync signal input unit 735 of the third display apparatus 733, and the fourth sync signal input unit 745 of the fourth display apparatus 743. Accordingly, the sync signal of the first display apparatus 713 is input to the second display apparatus 723, the third display apparatus 733, and the fourth display apparatus 743. Accordingly, the second display apparatus 723, the third display apparatus 733, and the fourth display apparatus 743 are synchronized with reference to the sync signal of the first display apparatus 713. Under such an environment, the first display apparatus 713 is a reference display apparatus.

Since the second display apparatus 723, the third display apparatus 733, and the fourth display apparatus 743 are synchronized with one another with reference to the sync signal of the first display apparatus 713, all 3D images 716, 726, 736, 746 displayed on the four display apparatuses 713, 723, 733, 743 are synchronized with one another in the display timing.

Accordingly, glasses-control signals generated by and output from the four display apparatuses 713, 723, 733, 743 (in FIG. 7, "emitter output" represents a glasses-control signal and the same applies to drawings and descriptions) are synchronized with one another so that their output timings are identical.

Accordingly, the user can watch all 3D images displayed on the first display apparatus 713, the second display apparatus 723, the third display apparatus 733, and the fourth display apparatus 743 using 3D glasses 700.

As described above, the plurality of display apparatus can be synchronized using the display apparatus shown in FIG. 5. Also, the user can watch the 3D images displayed on the plurality of display apparatuses using one pair of shutter glass type 3D glasses 700.

Hereinafter, a 3D image synchronization apparatus for synchronizing a 3D image will be explained. The 3D image synchronization apparatus may include a plurality of synchronization units 800.

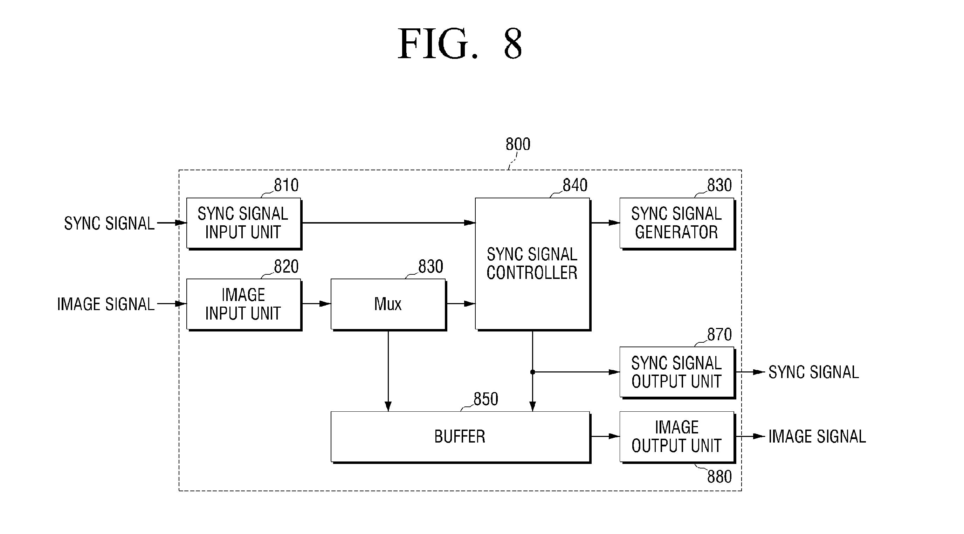

FIG. 8 is a block diagram illustrating a synchronization unit 800 according to an exemplary embodiment. As shown in FIG. 8, the synchronization unit 800 includes a sync signal input unit 810, an image input unit 820, a multiplexer 830, a sync signal controller 840, a buffer 850, a sync signal generator 860, a sync signal output unit 870, and an image output unit 880.

The sync signal input unit 810 receives a sync signal from an external apparatus. The sync signal recited herein is to control the timing of outputting an input image on a frame-by-frame basis. For example, the period of a sync signal corresponds to a period during which one frame of an image is output. Also, if the input image is a 3D image, the period of a sync signal may indicate a period of time during which the left-eye image and the right-eye image are each output one time. For example, the sync signal may be a horizontal sync signal or a vertical sync signal. Also, the sync signal may be used to generate a glasses-control signal which is to control the timing of opening and closing 3D glasses for watching a 3D image.

The image input unit 820 receives an image signal from the external apparatus. For example, the image input unit 820 may receive an image signal from an external apparatus such as a DVD player or a BD player. Also, the image input unit 820 may include a broadcast receiving antenna and a tuner to receive an image signal through a broadcast. The image input unit 820 may be diverse types of image interfaces. For example, the image input unit 820 may be a digital video/visual interactive (DVI) or a high-definition multimedia interface (HDMI). Also, the image input unit 820 may receive a 3D image signal consisting of a left-eye image and a right-eye image.

The multiplexer 830 multiplexes the input image signal and temporally transmit it to the buffer 850.

The sync signal controller 840 controls the buffer 850 to output the buffered image signal to the image output unit 880 according to the sync signal input through the sync signal input unit 810. That is, the sync signal controller 840 controls the image signal to be displayed according to the input sync signal if the sync signal is input to the sync signal input unit 810.

Also, the sync signal controller 840 controls the buffer 850 to output the buffered image signal to the image output unit 880 according to a sync signal included in the input image signal, if the sync signal is not input to the sync signal input unit 810. That is, the sync signal controller 840 controls the image signal to be output according to the sync signal included in the image signal if an extra sync signal is not input to the sync signal input unit 810.

In general, the image signal includes a sync signal for controlling the timing of displaying an image included in the image signal. For example, the sync signal included in the image signal may be a vertical sync signal and a horizontal sync signal. Accordingly, the sync signal controller 840 synchronizes the image signal according to the sync signal included in the image signal if an extra sync signal is not input through the sync signal input unit 810.

Also, if the sync signal is not input to the sync signal input unit 810 and the image signal is not input to the image input unit 820 either, the sync signal controller 840 outputs a sync signal generated by the sync signal generator 830. Since this is the case where the image signal is not input, the synchronization unit 800 only performs generating and outputting the sync signal.

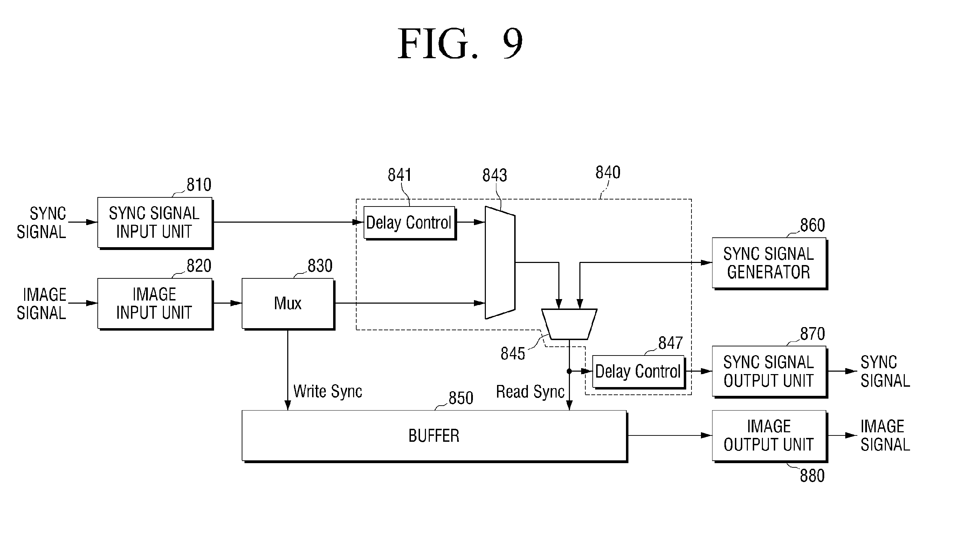

As described above, if a sync signal is received from the sync signal input unit 810, the sync signal controller 840 synchronizes the image according to the sync signal input through the sync signal input unit 810. Otherwise, the sync signal controller 840 synchronizes the image according to the sync signal included in the image signal. The detailed configuration of the sync signal controller 840 will be explained below with reference to FIG. 9.

The buffer 850 buffers the image signal which has been multiplexed by the multiplexer 830 on the frame basis. Also, the buffer 850 is controlled by the sync signal controller 840 to output the buffered image signal according to the sync signal. For example, the buffer 850 may output the image signal corresponding to one frame every one period of the sync signal.

The sync signal generator 860 generates a separate sync signal. Also, the sync signal generator 860 outputs the generated sync signal to the sync signal controller 840.

The sync signal output unit 870 outputs the sync signal received from the sync signal controller 840 to the external apparatus. For example, the sync signal output unit 870 may be connected to a display apparatus such as a TV to output the sync signal to the display apparatus.

The image output unit 880 outputs the image signal received from the buffer 850 to the connected external apparatus. For example, the image output unit 880 may be connected to a display apparatus such as a TV to output the image signal to the display apparatus. At this time, the image output unit 880 outputs the image signal synchronized according to the sync signal.

Hereinafter, the configuration of the sync signal controller 840 will be explained with reference to FIG. 9. FIG. 9 is a block diagram illustrating the sync signal controller 840 of the synchronization unit 800 according to an exemplary embodiment.

As shown in FIG. 9, the sync signal controller 840 includes a delay control 840, a first multiplexer 843, a second multiplexer 845, and another delay control 847.

The delay control 840 controls the delay of the sync signal input through the sync signal input unit 810.

The first multiplexer 843 selects one of the sync signal input from the sync signal input unit 810 and the sync signal included in the image signal input from the multiplexer 830 (that is, a frame lock signal) and outputs the selected sync signal. More specifically, the first multiplexer 843 selects the sync signal input from the sync signal input unit 810 if the sync signal of the sync signal input unit 810 and the sync signal of the multiplexer 830 are both received. If only one of the sync signal of the sync signal input unit 810 and the sync signal of the multiplexer 830 is received , the first multiplexer 843 selects and outputs the received sync signal.

The second multiplexer 845 controls the output of one of the sync signal output from the first multiplexer 843 and the sync signal output from the sync signal generator 860. More specifically, the second multiplexer 845 selects the sync signal output from the first multiplexer 843 and outputs the selected sync signal, if the sync signal output from the first multiplexer 843 and the sync signal output from the sync signal generator 860 are both received. If only one of the sync signal output from the first multiplexer 843 and the sync signal output from the sync signal generator 860 is received, the second multiplexer 845 selects and outputs the received sync signal.

The another delay control 847 controls the delay of the sync signal finally output from the second multiplexer 845 and outputs the sync signal to the sync signal output unit 840.

The buffer 850 writes the image signal when receiving a write sync signal from the multiplexer 830. Also, the buffer 850 outputs the written image signal to the image output unit 880 when receiving a read sync signal from the sync signal controller 840. At this time, the sync signal controller 840 outputs the read sync signal according to the sync signal, such that the buffer 850 outputs the image signal according to the sync signal.

Through the above-described configuration, if a sync signal is received from the sync signal input unit 810, the sync signal controller 840 synchronizes the image according to the sync signal received from the sync signal input unit 810. If no sync signal is received through the sync signal input unit 810, the sync signal controller 840 synchronizes the image according to the sync signal included in the image signal. Also, if the sync signal is not received from either the sync signal input unit 810 or from the image input unit 820, the sync signal controller 840 outputs the sync signal generated by the sync signal generator 830.

The synchronization unit 800 of the above-described configuration can synchronize the input image according to the sync signal input from the external apparatus. Also, the synchronization unit 800 may output the sync signal to the external apparatus. Accordingly, the plurality of 3D image display apparatuses can be synchronized using the synchronization unit 800.

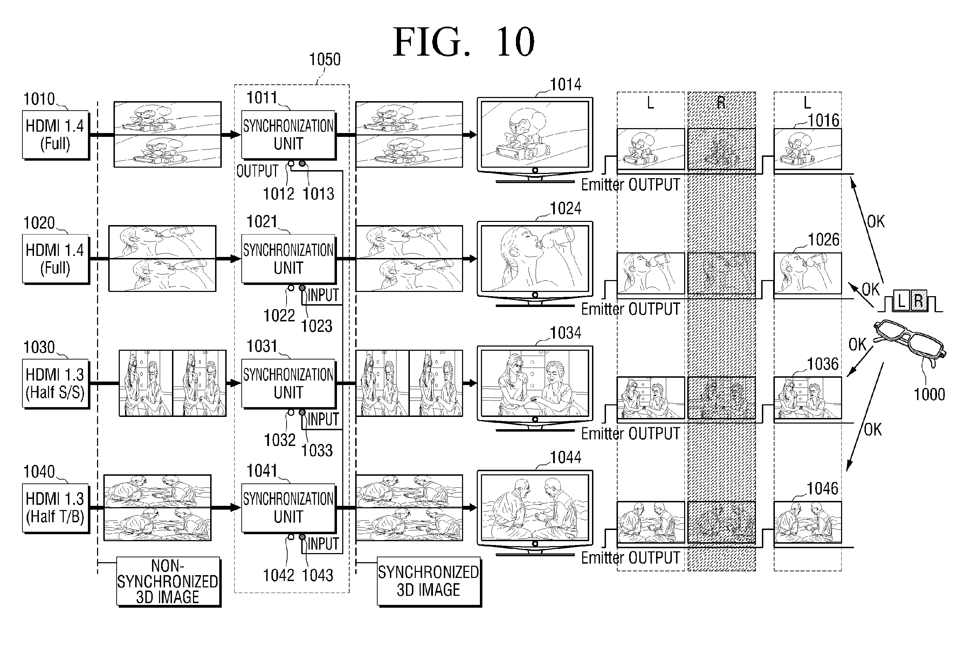

Hereinafter, the operation of the 3D image synchronization apparatus including a plurality of synchronization units will be explained with reference to FIG. 10. FIG. 10 is a view illustrating a 3D image providing system in which a plurality of display apparatus are synchronized using a separate 3D image synchronization apparatus 1050 according to an exemplary embodiment. As shown in FIG. 10, the 3D image providing system includes a 3D image synchronization apparatus 1050, a plurality of display apparatuses 1014, 1024, 1034, 1044, and 3D glasses 1000.

As shown in FIG. 10, the 3D image synchronization apparatus 1050 includes four synchronization units 1011, 1021, 2031, 1041. The four display apparatuses 1014, 1024, 1034, 1044 are connected to the four synchronization unit 1011, 1021, 1031, 1041. All the four synchronization units 1011, 1021, 1031, 1041 have the same configuration as the synchronization unit 800 of FIG. 8. Accordingly, all the four synchronization units 1011, 1021, 1031, 1041 include sync signal output units 1012, 1022, 1032, 1042 and sync signal input unit 1013, 1023, 1033, 1043.

The four synchronization unit 1011, 1021, 1031, 1041 receive 3D images from four video apparatuses 1010, 1020, 1030, 1040. Also, frames of the 3D images are input from the four video apparatuses 1010, 1020, 1030, 1040 at different timings. That is, the four video apparatuses 1010, 1020, 1030, 1040 output the images without synchronizing them.

In FIG. 10, the first sync signal output unit 1012 of the first synchronization unit 1011 is connected to the second sync signal input unit 1023 of the second synchronization unit 1021, the third sync signal input unit 1033 of the third synchronization unit 1031, and the fourth sync signal input unit 1043 of the fourth synchronization unit 1041. Accordingly, the sync signal of the first synchronization unit 1011 is input to the second synchronization unit 1021, the third synchronization unit 1031, and the fourth synchronization unit 1041. Accordingly, the second synchronization unit 1021, the third synchronization unit 1031, and the fourth synchronization unit 1043 are synchronized with reference to the sync signal of the first synchronization unit 1011. Under such an environment, the first synchronization unit 1011 is a reference apparatus.

Since the second synchronization unit 1021, the third synchronization unit 1031, and the fourth synchronization unit 1041 are synchronized with reference to the sync signal of the first synchronization unit 1011, the image signals output from the four synchronization units 1011, 1021, 1031, 1041 are synchronized with one another. Accordingly, the 3D images 1016, 1026, 1036, 1046 displayed on the four display apparatuses 1014, 1024, 1034, 1044 are synchronized with one another in the display timing.

Accordingly, the glasses-control signals generated by and output from the four display apparatuses 1014, 1024, 1034, 1044 (in FIG 10, Emitter output represents the glasses-control signal and the same applies to the drawings and descriptions) are synchronized with one another so that their output timings are identical.

Accordingly, the user can watch all the 3D images displayed on the first display apparatus 1014, the second display apparatus 1024, the third display apparatus 1034, and the fourth display apparatus 1044 using the 3D glasses 1000.

As described above, the plurality of display apparatuses can synchronize the timing of displaying the 3D images using the 3D image synchronization apparatus 1050 including the plurality of synchronization units shown in FIG. 8.

In particular, if the input image is a 3D image consisting of a left-eye image and a right-eye image, the plurality of display apparatuses display the left-eye image and the right-eye image of the 3D image alternately according to the sync signal.

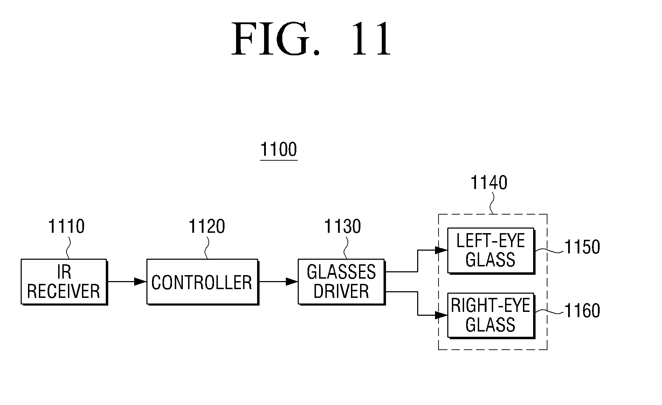

If the input image is a 3D image, the 3D image providing system uses 3D glasses. Hereinafter, the 3D glasses will be explained with reference to FIG. 11. The 3D glasses 1100 open and close the left-eye glass and the right-eye glass alternately according to the glasses-control signals received from the plurality of display apparatuses, thereby enabling the user to watch the left-eye image and the right-eye image with his/her left and right eyes.

FIG. 11 is a block diagram illustrating the 3D glasses 1100 according to an exemplary embodiment. As shown in FIG. 11, the 3D glasses 1100 include an infrared ray (IR) receiver 1110, a controller 1120, a glasses driver 1130, and a glasses unit 1140.

The IR receiver 1110 receives a glasses-control signal corresponding to the sync signal of the 3D image from a display apparatus connected in a wired or wireless manner. The display apparatus radiates the glasses-control signal using the IR having directivity through an IR transmitter, and the IR receiver 1110 of the 3D glasses 1100 receives the radiated IR to receive the glasses-control signal.

For example, the glasses-control signal transmitted from the display apparatus to the IR receiver 1110 may a signal in which a high level of a first period and a low level of a second period are alternated at predetermined time intervals. In this case, the 3D glasses 1100 open the left-eye glass 1150 during the first period of the high level, and open the right-eye glass 1160 during the second period of the low level.

The IR receiver 1110 transmits the sync signal received from at least one of the plurality of display apparatuses to the controller 1120.

The controller 1120 controls the overall operation of the 3D glasses 1100. Particularly, the controller 1120 transmits the glasses-control signal received at the IR receiver 1110 to the glasses driver 1130, thereby controlling the operation of the glasses driver 1130. In particular, the controller 1130 controls the glasses driver 1130 to generate a driving signal to drive the glasses unit 1140 based on the glasses-control signal.

The glasses driver 1130 generates the driving signal based on the glasses-control signal received from the controller 1120. In particular, since the glasses unit 1140 includes the left-eye glass 1150 and the right-eye glass 1160, the glasses driver 1130 generates a left-eye driving signal for driving the left-eye glass 1150 and a right-eye driving signal for driving the right-eye glass 1160, and transmits the generated left-eye driving signal to the left-eye glass 1150 and the generated right-eye driving signal to the right-eye glass 1160.

The glasses unit 1140 includes the left-eye glass 1150 and the right-eye glass 1160 as described above, and opens and closes each glass alternately according to the driving signal received from the glass driver 1130.

Using the 3D glasses 1100 described above, the user can watch the left-eye image and the right-eye image displayed on the plurality of display apparatuses with his/her left-eye and right eye alternately.

As described above, at least one of the plurality of display apparatuses generates a glasses-control signal using a sync signal, and transmits the glasses-control signal to the 3D glasses. Then, the 3D glasses receive the glasses-control signal from the at least one of the plurality of display apparatuses, and synchronize the timing of opening and closing the left-eye glass and the right-eye glass according to the received glasses-control signal.

As described above, the plurality of display apparatuses of the 3D image providing system synchronize the timing of displaying the left-eye image and the right-eye image according to one sync signal. The 3D glasses synchronize the timing of opening and closing the left-eye glass and the right-glass with the timing of displaying the left-eye image and the right-eye image in the plurality of display apparatuses according to the glasses-control signal.

For example, the sync signal has a pattern in which a first period and a second period are alternated, and the glasses-control signal has a pattern in which a first period and a second period alternate in synchronization with the sync signal. In this case, the plurality of display apparatuses display the left-eye image during the first period of the sync signal and the left-eye image during the second period of the sync signal. The left-eye glass of the 3D glasses is opened and the right-eye glass is closed during the first period, and the left-eye glass is closed and the right-eye glass is opened during the second period.

Accordingly, the user can watch the 3D images displayed on the plurality of display apparatuses of the 3D image providing system using the 3D glasses.

While the plurality of images are input to the 3D image synchronization apparatus or the plurality of display apparatuses in the above embodiment, this is merely an example for convenience of explanation, and the number of input images is not limited. That is, the 3D image synchronization apparatus or the plurality of display apparatuses may receive images from different apparatuses or may receive an image from the same apparatus. More specifically, the 3D image synchronization apparatus may receive the same image from one external apparatus. Also, the 3D image synchronization apparatus may output different parts of the same image through separate image output units. Also, the 3D image synchronization apparatus may receive images from at least two external apparatuses.

Any apparatus can be applied if it can display a 3D image. For example, the display apparatus may be a TV, a monitor, or a portable multiplexer player (PMP).

As described above, since the 3D image synchronization apparatus and the 3D image providing system which synchronize at least one input 3D image according to one sync signal, and output the synchronized 3D image according to various exemplary embodiments are provided, the plurality of display apparatuses are synchronized according to one sync signal so that the user can watch the 3D image on the plurality of display apparatuses using one pair of 3D glasses.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A three dimensional (3D) image synchronization apparatus, comprising:
a plurality of synchronization units, each of which synchronizes an input 3D image using a sync signal and outputs the synchronized 3D image,
wherein the plurality of synchronization units each synchronizes at least one input 3D image using a single primary sync signal as the sync signal and outputs the synchronized 3D image.

2. The 3D image synchronization apparatus as claimed in claim 1, wherein the plurality of synchronization units comprises a primary synchronization unit, which outputs the primary sync signal, and at least one secondary synchronization unit which receives the primary sync signal and outputs the synchronized 3D image according to the received primary sync signal.

3. The 3D image synchronization apparatus as claimed in claim 2, wherein the primary synchronization unit comprises:
a first image input unit which receives a 3D image signal;
a first buffer which buffers the received 3D image signal on a frame-by-frame basis;
a first image output unit which outputs the buffered 3D image signal;
a first controller which controls the buffer to output the buffered 3D image signal to the first image output unit according to a sync signal included in the 3D image signal; and
a sync signal output unit which outputs the sync signal included in the 3D image signal as the primary sync signal.

4. The 3D image synchronization apparatus as claimed in claim 2, wherein the primary synchronization unit comprises:
a first input unit which receives a 3D image signal;
a sync signal generator which generates the sync signal;
a first buffer which buffers the input 3D image signal on a frame-by-frame basis;
a first image output unit which outputs the buffered 3D image signal;
a first controller which controls the buffer to output the buffered 3D image signal to the first image output unit according to the generated sync signal; and
a sync signal output unit which outputs the generated sync signal as the primary sync signal.

5. The 3D image synchronization apparatus as claimed in claim 2, wherein each of the at least one secondary synchronization units comprises:
a second image input unit which receives a 3D image signal;
a sync signal input unit which receives the primary sync signal from the primary synchronization unit;
a second buffer which buffers the input 3D image signal on a frame-by-frame basis;
a second image output unit which outputs the buffered 3D image signal; and
a controller which controls the buffer to output the buffered 3D image signal to the second image output unit according to the primary sync signal.

6. The 3D image synchronization apparatus as claimed in any one of claims 1 to 5, wherein each of the plurality of synchronization units receives 3D images from a single external apparatus.

7. The 3D image synchronization apparatus as claimed in claim 6, wherein each of the plurality of synchronization units receives a different 3D image from the single external apparatus.

8. The 3D image synchronization apparatus as claimed in claim 6, wherein each of the plurality of synchronization units receives the same 3D image from the single external apparatus.

9. The 3D image synchronization apparatus as claimed in any one of claims 1 to 8, wherein the plurality of synchronization units receive 3D images from at least two external apparatuses.

10. A 3D image providing system, comprising:
a 3D image synchronization apparatus which synchronizes at least one input 3D image using a single sync signal, and comprises a plurality of output units, each of which outputs the at least one synchronized 3D image; and
a plurality of display apparatuses which receive a plurality of 3D images from the 3D image synchronization apparatus, and display the plurality of 3D images.

11. The 3D image providing system as claimed in claim 10, wherein each of the plurality of display apparatuses comprises a glasses-signal transmitter which generates a glasses-control signal for synchronizing a timing of opening and closing a left-eye glass and a right-eye glass of 3D glasses based on the sync signal, and which transmits the generated glasses-control signal.

12. The 3D image providing system as claimed in claim 11, further comprising the 3D glasses which receive a glasses-control signal from at least one of the plurality of display apparatuses, and which synchronize the timing of opening and closing the left-eye glass and the right-eye glass according to the received glasses-control signal.

13. The 3D image providing system as claimed in claim 12, wherein the plurality of display apparatuses synchronize timing of displaying a left-eye image and a right-eye image according the sync signal,
wherein the 3D glasses synchronize the timing of displaying the left-eye image and the right-eye image of the 3D image on the plurality of display apparatuses with the timing of opening and closing the left-eye glass and the right-eye glass of the 3D glasses according to the glasses-control signal.

14. The 3D image providing system as claimed in claim 13, wherein the sync signal has a pattern in which a first period and a second period are alternated, and the glasses-control signal has a pattern in which the first period and the second period are synchronized with the sync signal so that the first period and the second period are alternated,
wherein the plurality of display apparatuses display the left-eye image during the first period of the sync signal and the right-eye image during the second period of the sync signal,
wherein the 3D glasses are driven in a manner that the left-eye glass is opened and the right-eye glass is closed during the first period and the left-eye glass is closed and the right-eye glass is opened during the second period.

15. The 3D image providing system as claimed in claim 10, wherein the 3D image synchronization apparatus comprises a plurality of synchronization units each of which synchronizes the at least one input 3D image using a primary sync signal as the sync signal and outputs the synchronized 3D image,
wherein the plurality of synchronization units comprises:
a primary synchronization unit which outputs the primary sync signal, and
at least one secondary synchronization unit which receives the primary sync signal from the primary synchronization unit and outputs the 3D image according to the received primary sync signal.
